# EUROPEAN PATENT SPECIFICATION

(11) **EP 3 323 731 B1**
(45) Date of publication and mention of the grant of the patent: **22.04.2020**
(21) Application number: 16199282.1
(22) Date of filing: 17.11.2016
(51) Int. Cl.: B64F 5/50, B64F 5/10, B64D 41/00

(54) **ELEVATOR SYSTEM FOR AUXILIARY POWER UNIT**
AUFZUGSSYSTEM FÜR EINE HILFSSTROMEINHEIT
SYSTÈME D'ASCENSEUR POUR UNITÉ D'ALIMENTATION AUXILIAIRE

(43) Date of publication of application: 23.05.2018
(73) Proprietor: Airbus Operations S.L., 28906 Getafe (ES)
(72) Inventor: Palomares Mora, Angel, 28906 Madrid (ES)

(56) References cited:
- CN-U- 204 279 977
- DE-U1-202004 015 422
- GB-A- 1 086 290
- US-A- 1 993 245
- US-A- 2 772 004
- US-A- 3 120 316
- US-A- 3 187 907
- US-A- 6 039 287

## Description

### OBJECT OF THE INVENTION

The present invention pertains to the aeronautical field, and relates to an elevator system to position element structure in order to facilitate its integration inside an aircraft.

More specifically, the invention is intended for the installation of the auxiliary power unit ("APU") and the ancillary elements inside the housing of the tail cone of an aircraft.

### BACKGROUND OF THE INVENTION

It is well known in the aeronautical industry that the rear fuselage 120 of an aircraft 110, generally known as tail cone 121, house at least one Auxiliary Power Unit (APU) 122. The APU 122 is a gas turbine which is used in aircraft 110 in order to provide solely electric, or pneumatic, or hydraulic power, or any combination of these powers used simultaneously. The APU 122 serves for the following main functions:
- to provide power to aircraft system when the main engines 131, 132, are not running;
- to enable starting the main engines 131,132, without need for external power;
- to provide power to the aircraft 110 when the main engines 131, 132 are not running, for example, while the aircraft 110 is waiting at an airport gate;
- to generate electrical power for aircraft systems;
- to provide hot air for the pneumatic systems. This hot air feeds the air conditioning system and/or the anti-ice system;

Due to the APU 122 being a possible fire focal point, the current trend among most manufacturers is that the APU 122 has to be located in the tail cone 121, as above mentioned, in order to protect the rest of the aircraft fuselage 130. In order to do that the APU compartment is separated to the rest of fuselage via a bulkhead firewall 123.

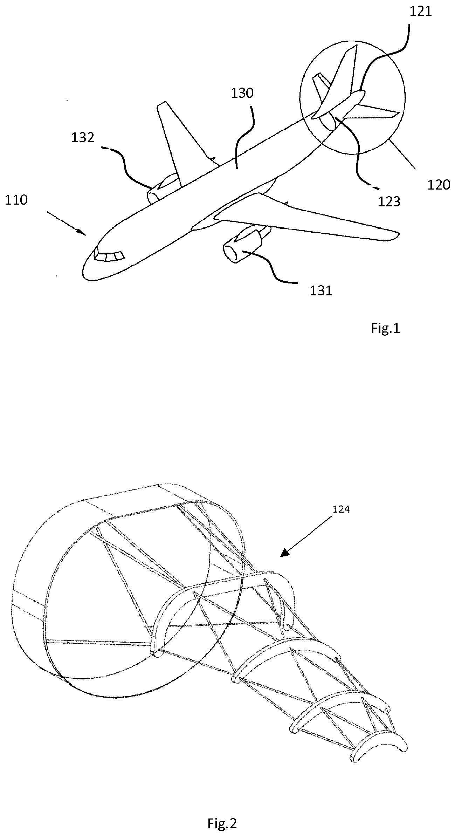

Inside the tail cone 121, the conventional constructions in order to maintain and stabilize the APU 122 is a support system 124. The support system of APU 122 comprises a frame of rods or bars secured directly to the semi-single-hull structure of the tail cone 121. For a better comprehension of the figures, the support system 124 will be represented only in figure 2, but its presence is indispensable to support safely the APU 122. In order to have access to the tail cone 121 and particularly toward the APU and its ancillary systems 127a, 127b, it's quite common to have a door 125 on the underside of the tail cone 121. But, the amount of room left inside the APU compartment 126 is quite small.

In addition to the above, it must be taken into account that the increase in electrical demand on modern aircraft 110 and the stringent noise-related requirements of the regulations imply the manufacturing of APU 122 and its ancillary systems 127a, 127b increasingly larger in size, which is increasingly worsening the problem of space related to the APU compartment 126.

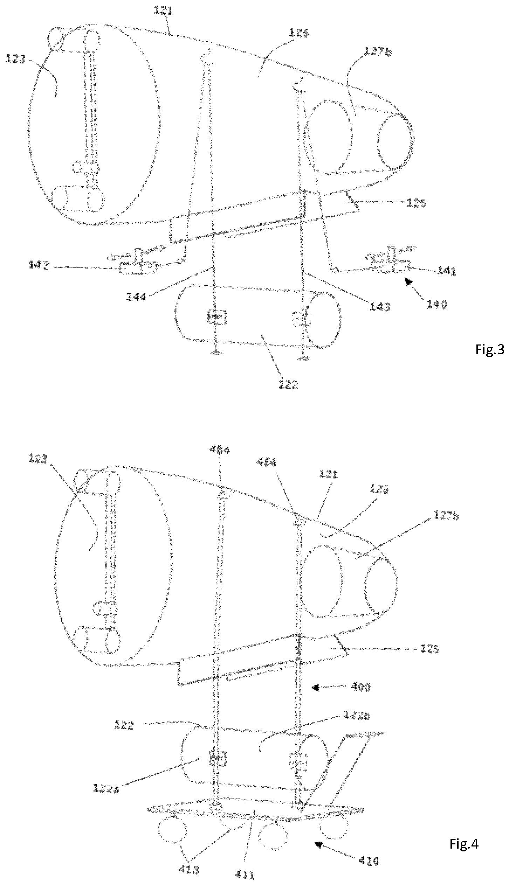

In the state of art, the most used tool in order to proceed to the installation of the APU 122 in its housing inside the APU compartment 126 is based on a fish pole system 140 as shown on figure 3. Unfortunately, due to the tight tolerances required to the installation of the APU 122 in its housing, and particularly its installation within the support 124, this kind of systems 140 leads to some problems related to misalignments, an installation time longer, but also damages outside, such as on the tail cone 121, and inside such as on the support system 124 and/or on the ancillary systems 127a, 127b.

Moreover, the existing fish pole systems 140 usually need at least two operators using respectively the control system 141, 142, to install the APU 122 in the APU compartment 126.

Finally, the using of fish pole systems 140 can be dangerous. In fact, when at least one of the cables 143, 144 fails, the APU 122 can fall down at least on one of the operators and can risk to injure them in the best case, but sometime can kill in the worst case.

US3120316A describes a loading aid for the transfer of a load between a vehicle and an aircraft which can be accurately positioned both horizontally and vertically with the vehicle or the aircraft and can be accurately adjusted to align the load as it is moved into or out of the aircraft or vehicle.

US3187907 describes an elevating and transportation trailer for the handling and positioning of relatively light aircraft components.

US2772004 relates to a portable gantry crane that can be used for the transferring of loads of any character from rail cars to trucks, trucks to trucks, and from trucks to planes or vice versa, or from or to pallets, as well as the raising and discharging of relatively small water craft and ships. The portable and collapsible gantry crane comprises an elongated, horizontally-disposed bridge beam; a pair of positioning guide members pivoted to said bridge beam, one adjacent each end on a horizontal axis, each said guide member having a pair of parallel side plates lying adjacent the exterior side faces of said beam, a pair of coaxial pinions, one journaled adjacent each side plate, and a pair of coaxial rollers likewise journaled adjacent each side plate along an axis parallel to the axis of said pinions, said rollers being spaced apart from said pinions and generally collinear therewith; a pair of supporting columns, each having a pair of racks on one side.

DE202004015422 (U1) describes a positioning system for a tool module, especially a tool module with a lifting arrangement, with a driven lower vehicle, frame parts, drive wheels, base plate and coupling arrangements for insertion or removal of the tool module from the carrying lower vehicle.

A system which would provide a solution to the existing problems in the state of the art was therefore desirable.

### SUMMARY OF THE INVENTION

In order to solve the drawbacks stated above, the present invention is defined in the attached independent and dependent claims, and is based on an elevator system which allows to the APU to be raised from the ground or a platform, to be housed inside the APU compartment in the tail cone of the aircraft.

### BRIEF DESCRIPTION OF THE DRAWINGS

To complete the description and in order to provide for a better understanding of the invention, a set of drawings is provided. Said drawings form an integral part of the description and illustrate preferred embodiments of the invention. The drawings comprise the following figures:
- Figure 1, is a schematic representation of an aircraft;
- Figure 2, is a schematic representation of the support of the APU, according to the prior art;
- Figure 3, is a schematic representation of a fish pole system in order to raise the APU inside the APU compartment, according to the prior art;
- Figure 4, is a schematic representation of the elevator system in order to raise APU inside the APU compartment, according to an embodiment of the invention;
- Figure 5, is a schematic representation of the APU inside the APU compartment;
- Figure 6a-6g, are schematic representations of different elements of the elevator system, according to an embodiment of the invention.

### DETAILED DESCRIPTION OF THE DRAWINGS

The present invention is directed generally toward elevator systems for auxiliary power unit ("APU"), and associated systems. A person skilled in the relevant art will understand, however, that the invention may have additional embodiments, and that the invention may be practiced without several of the details of the embodiments described below with reference to figures 4-6f.

In an embodiment shown in figure 4, in order to proceed to the installation of the APU 122 in its housing inside the APU compartment 126, the invention propose the using of an elevator system 400 in order to replace the fish pole system 140 of the state of art. The elevator system 400 comprises a support 410 on which the APU 122 is put down on its upper surface 411. The support 410 is mounted on a set of wheels 413 or equivalent means, in order to move easily the APU 122. The set of wheels 413 is able to move via a manual traction of the support 410 or via a set of electric motor with control unit able to be managed by a terminal. This terminal is able to be fixed and/or mobile from the support 410. The working of this terminal, its different modes of use and interaction with the elevator system 400 will be explain more in details during the rest of the description.

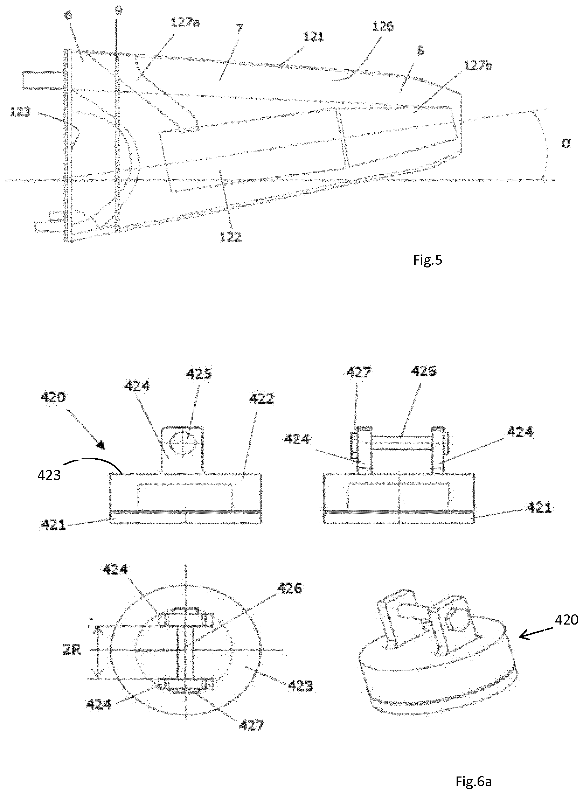

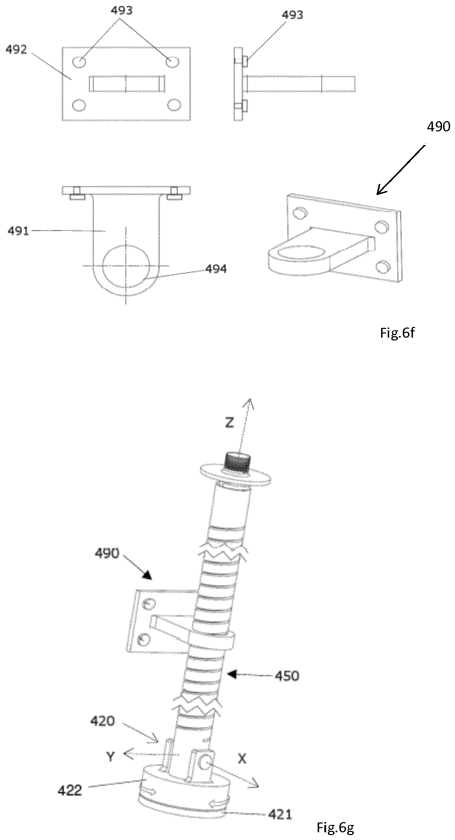

The upper surface 411 of the support 410 comprise some attachments point in order to fasten at least two base elements 420 rigidly on the support 410. Each base element 420, as shown in detail in figure 6a, comprises an electric motor comprising a stator 421 fixed to the support 410 and a rotor fixed on a circular plate 422. Each circular plate 422 comprises firmly on its upper surface 423 two parallel connecting rods 424. The connecting rods 424 comprise respectively a hole 425, such as both of the hole 425 are able to receive a through bolt 426. The through bolt 426 is able to be closed at the end with a nut 427. The elevator system 400 comprises also a bar 450 comprising a lower bar 460, a standard bar 470 and an upper bar 480. In order to explain the assembly phase of the bar 450 and its working in order to up or down the APU, we will start with the description from the upper bar to the lower bar.

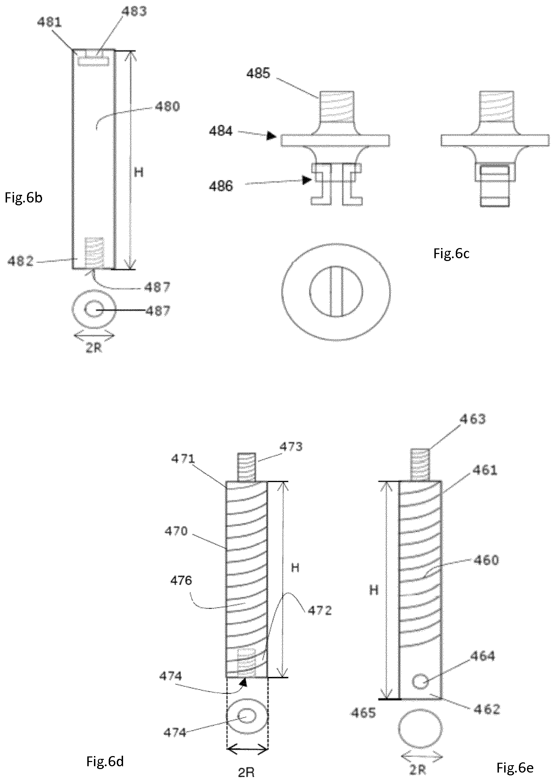

As shown in figure 6b, the upper bar comprises respectively two ends 481, 482, where the end 481 comprises a hole 483 fit to be able to receive an attachment means 484, as shown in figure 6c. This attachment means 484 comprises a fixation means 485, such as a fitting bolt, in order to fixate the elevator system 400 via the upper bar 480 to the structure of the APU compartment 126. The attachment means 484 comprises also an expandable means 486, such as a spring system for example. The expandable means 486 fits the distance between the upper bar 480 and the upper surface 411 of the support 410. The expandable means 486 is able to fit to the hole 483 of the end 481 of the upper bar 480, such as to allow to the bar 450 to turn freely and avoid to the aircraft structure, and particularly the tail cone part to support the weight of the APU or any load. In order to reach this objective, the expandable means 486 is able to support load superior to 1000kg. The end 482 of the upper bar 480 comprises a hole 487 able to receive a fitting bolt 473 from a standard bar 470.

As shown in figure 6d, each standard bar 470 comprises respectively two ends 471, 472, where a first end 471 comprises a fitting bolt 473 able to screw respectively inside the fitting hole 487, 474 of the upper bar 480 or of a standard bar 470, and where the end 472 comprises a fitting hole 474 able to receive a fitting bolt 473 from standard bar 470 or a fitting bolt 463 from lower bar 460.

Each lower bar 460 comprises respectively two ends 461, 462. A first end 461 comprises a fitting bolt 463 able to screw inside a fitting hole 474 of the standard bar 470 or the fitting hole 487 of the upper bar 480, and where the second end 462 comprises a through bore 464 able to receive the through bolt 426.

Each upper bar 480, standard bar 470 or lower bar 460 is defined as being a metallic cylinder with a radius R and a height H, such as the radius R is defined sufficiently to support the weight W of the APU according the final height of the bar 450.

The lower bar 460 comprise at its end 462 a flat circular base 465 able to fit between the connecting rods 424. For that, the distance between the connecting rods 420 is 2R. The flat circular base 465 allows to avoid the articulation of the bar 450 on the axis X, and the bolt 426 going through respectively the hole 425 and 464 as shown in figure 6e, for connecting the bar 450 on the upper surface 423 of the circular plate 422.

As shown in figure 6f, the invention comprise also a mount bracket 490 comprising two linked parts, where the first part is a translation means 491 on the bar 450, and the second part is a support means 492. The support means 492 is a bracket able to be fastened to the lateral part 122a, 122b of the APU 122 via bolts 493. In a preferred embodiment, the translation means 491 comprises a ring 494 comprising a female thread. The lower bar 460 and the standard bar 470 comprise respectively on their external surface a male thread 466, 476 such as the translation mean 492 is able to up until the higher standard bar 470 or down until the lower bar 460 according the sense of rotation of the bar 450. In order to be able to raise any load such as the APU122, at least two bars 450 have to be positioned in order to bear the load of the APU.

The Elevator System 400, in an example not part of the invention, is controlled and monitored by a terminal, able to be fixed and/or mobile from the support 410.The said terminal comprising a set of microprocessors and electronic associated, such as for example in a non-exhaustive list wireless emitters and receivers, a stylus, a voice recorder able via a tactile display to be an interface IHM between an operator and the elevator system 400. The said terminal via the set of microprocessors is the digital electronic controller that performs the logic for all working modes of the elevator system 400 such as:
- the wireless synchronization phase of the different motors with the terminal;
- the control of the motor of the wheel 413;
- the control and regulation of the velocity to up or down the APU, and
- the different sequences of shut down;

In an example not part of the present invention, the terminal is able to manage the wireless synchronization phase of the different motors of the elevator system 400 with the terminal. In order to do that, each motors comprise a control unit with wireless components associated, such as a wireless emitter and receiver. Each control unit is able to be in idle when the terminal is switch off or is out of the wireless field of the motors. The set of motors of the elevator system 400 are fed by a rechargeable and removable battery. The battery is housed on the support 410 in an accessible part but not on the surface 411. To perform the synchronization phase, the terminal apply the following steps:
- determining of the list of wireless motors active, which contain three categories, such as "motor for direction" of the wheel 413, "motor for orientation" of the wheel 413, "motor to up and down" the load,
- connecting of the terminal to the wireless motor active,
- synchronization of step of each motor of each categories of motor in order to move step by step in the same direction, and/or orientation and/or velocity.

In an example not part of the present invention, the terminal is able via wireless communication to control the different motors of the wheel 413 in order to interact on the direction, orientation, velocity, and brake system. For that, the terminal apply the following steps:
- Detection of a set of instruction from the operator composed with a direction, such as move forward, or move backward, and an orientation, such as turn right, or turn left, or move threat;
- Deactivation of the brake system, put by default when the operator doesn't interact with the terminal;
- Regulation of the velocity to move the support 410 according the pressure on the tactile interface of the terminal;
- Activation of the brake system after complete realization of the instruction;

In an example not part of the present invention, the terminal is able to control and regulate the velocity to up and down the load, such as the APU 122. For that, the terminal apply the following steps:
- Detection of an instruction from the operator such as "UP" or "Down";
- Deactivation of the brake system, put by default when the operator doesn't interact with the terminal;
- Regulation of the velocity and the sense of rotation of each bar 450 to move up or down the load via the translation of each mount bracket 490, the said velocity being relative to the pressure on the tactile interface of the terminal;
- Activation of the brake system after complete realization of the instruction;

In an example not part of the present invention, the terminal is able to proceed to different sequences of shut down. For that, the terminal apply the following steps:
- If detection of contradictory instructions, when activation of the brake system and the last instruction received is remove;
- for the motors of the wheels, if there is a detection of steps de-synchronization of at least one motor with respect to the others motors of its category, then activation of the brake system and setup of the counter of step;
- for the motors to up or down the load, if there is a detection of steps de-synchronization of at least one motor with respect to the others motors of its category, then activation of the brake system, except for the motors in advance until all mount bracket arrive at the same level that the others; for that the operator has the possibility to turn the motors not brake in order to down the load via the interface;
- if detection of a wireless de-synchronization of at least one motor with the terminal, then activation of the brake system and the synchronization phase restart;
- for any emergency or request from the operator to stop the Elevator System, the operator via the interface is able to activate the brake system.

## Claims

1. Elevator system (400) for installing a load (122) inside an aircraft compartment (126), comprising:
- attachment means (484) to attach the elevator system (400) to the internal structure of the aircraft compartment (126),
- a support (410) having an upper surface (411), the support mounted on a set of wheels (413) configured to move via a manual traction, or a set of electric motors, said electric motors being configured to be managed by a terminal;
- attachment points placed on the upper surface (411) of the support (410);
- at least two base elements (420) fastened to the attachment points, and configured to rotate a bar (450);
- the bar (450) comprising:
- an upper bar (480) comprising two ends (481, 482), where a first end (481) comprises a first hole (483) for receiving the attachment means (484), and where a second end (482) comprises a second hole (487) configured to receive a first or a second fitting bolt (473, 463);
- at least one standard bar (470), comprising two ends (471, 472), a first end (471), and a second end (472) comprising a third hole (474) configured to receive a first or a second fitting bolt (473, 463), where the first end (471) accommodates the first fitting bolt (473) configured to screw inside the second hole (487) of the upper bar second end (482), or inside the third hole (474) of the standard bar second end (472);
- a lower bar (460) comprising two ends (461, 462), where a first end (461) accommodates the second fitting bolt (463) configured to screw inside the third or the second hole (474, 487), and where a second end (462) comprises a through bore (464) configured to receive a through bolt (426) to link the bar (450) to the base element (420);
- and, a mount bracket (490) to be fastened to the lateral part (122a, 122b) of the load (122),
- wherein the lower (460) and standard (470) bars respectively comprises on their external surfaces a male thread (466, 476) configured to allow the rotation of the bar (450) around the mount bracket (490) to go up until the higher standard bar (470), or to go down until the lower bar (460) depending on the direction of rotation of the bar (450).

2. Elevator system (400), according to claim 1, further comprising attachment means (484) that comprise:
- fixation means (485) configured to fix the upper bar (480) to the internal structure of the aircraft compartment (126), and
- expandable means (486) configured to adjust the length of the bar (450), and the distance between the upper bar (480) and the upper surface (411) of the support (410).

3. Elevator system (400), according to claim 2, wherein the expandable means (486) are configured to fit the first hole (483) of the first end (481) of the upper bar (480), to allow the bar (450) to turn freely and avoid to the aircraft structure to support the weight of the load (122).

## Patentansprüche

1. Hebesystem (400) zum Installieren einer Last (122) in einem Luftfahrzeugabteil (126), das Folgendes umfasst:
- Befestigungsmittel (484) zum Befestigen des Hebesystems (400) an der Innenstruktur des Luftfahrzeugabteils (126),
- einen Träger (410), der eine Oberseite (411) besitzt, wobei der Träger auf einem Satz Räder (413), die konfiguriert sind, sich mittels manueller Zugkraft zu bewegen, oder einem Satz Elektromotoren montiert ist, wobei die Elektromotoren konfiguriert sind, durch ein Endgerät gemanagt zu werden;
- Befestigungspunkte, die auf der Oberseite (411) des Trägers (410) angeordnet sind;
- mindestens zwei Grundelemente (420), die an den Befestigungspunkten befestigt sind und konfiguriert sind, einen Stab (450) zu drehen; wobei
- der Stab (450) Folgendes umfasst:
- einen oberen Stab (480), der zwei Enden (481, 482) umfasst, wobei ein erstes Ende (481) ein erstes Loch (483) zum Aufnehmen des Befestigungsmittels (484) umfasst und ein zweites Ende (482) ein zweites Loch (487) umfasst, das konfiguriert ist, eine erste oder eine zweite Passschraube (473, 463) aufzunehmen;
- mindestens einen Normstab (470), der zwei Enden (471, 472) umfasst, wobei ein erstes Ende (471) und ein zweites Ende (472) ein drittes Loch (474) umfassen, das konfiguriert ist, eine erste oder eine zweite Passschraube (473, 463) aufzunehmen, wobei das erste Ende (471) die erste Passschraube (473) aufnimmt, die konfiguriert ist, in das zweite Loch (487) des zweiten Endes (482) des oberen Stabs oder in das dritte Loch (474) des zweiten Endes (472) des Normstabs geschraubt zu werden;
- einen unteren Stab (460), der zwei Enden (461, 462) umfasst, wobei ein erstes Ende (461) die zweite Passschraube (463) aufnimmt, die konfiguriert ist, in das dritte oder das zweite Loch (474, 487) geschraubt zu werden, und ein zweites Ende (462) eine Durchgangsbohrung (464) umfasst, die konfiguriert ist, eine Durchgangsschraube (426) aufzunehmen, um den Stab (450) mit dem Grundelement (420) zu verbinden; und
- eine Halterung (490), die am seitlichen Teil (122a, 122b) der Last (122) befestigt werden soll, wobei
- der untere Stab (460) bzw. Normstab (470) an ihren Außenseiten ein Bolzengewinde (466, 476) umfassen, das konfiguriert ist, die Drehung des Stabs (450) um die Halterung (490) abhängig von der Richtung der Drehung des Stabs (450) aufwärtsgehend bis zum höheren Normstab (470) oder abwärtsgehend zum unteren Stab (460) zu ermöglichen.

2. Hebesystem (400) nach Anspruch 1, das ferner Befestigungsmittel (484) umfasst, die Folgendes umfassen:
- Fixierungsmittel (485), die konfiguriert sind, den oberen Stab (480) an der Innenstruktur des Luftfahrzeugabteils (126) zu fixieren, und
- erweiterbare Mittel (486), die konfiguriert sind, die Länge des Stabs (450) und den Abstand zwischen dem oberen Stab (480) und der Oberseite (411) des Trägers (410) anzupassen.

3. Hebesystem (400) nach Anspruch 2, wobei die erweiterbaren Mittel (486) konfiguriert sind, in das erste Loch (483) des ersten Endes (481) des oberen Stabs (480) zu passen, dem Stab (450) zu ermöglichen, sich frei zu drehen, und zu verhindern, dass die Luftfahrzeugstruktur das Gewicht der Last (122) trägt.

## Revendications

1. Système d'élévateur (400) servant à l'installation d'une charge (122) à l'intérieur d'un compartiment d'aéronef (126), comprenant :
- des moyens d'attache (484) pour attacher le système d'élévateur (400) à la structure interne du compartiment d'aéronef (126),
- un support (410) ayant une surface supérieure (411), le support étant monté sur un ensemble de roues (413) configurées pour se déplacer par le biais d'une traction manuelle, ou d'un ensemble de moteurs électriques, lesdits moteurs électriques étant configurés pour être gérés par un terminal ;
- des points d'attache placés sur la surface supérieure (411) du support (410) ;
- au moins deux éléments de base (420) fixés aux points d'attache, et configurés pour entraîner en rotation une barre (450) ;
- la barre (450) comprenant :
- une barre supérieure (480) comprenant deux extrémités (481, 482), où une première extrémité (481) comprend un premier trou (483) servant à recevoir les moyens d'attache (484), et où une deuxième extrémité (482) comprend un deuxième trou (487) configuré pour recevoir un premier ou un deuxième boulon d'ajustement (473, 463) ;
- au moins une barre standard (470), comprenant deux extrémités (471, 472), une première extrémité (471), et une deuxième extrémité (472) comprenant un troisième trou (474) configuré pour recevoir un premier ou un deuxième boulon d'ajustement (473, 463), où la première extrémité (471) loge le premier boulon d'ajustement (473) configuré pour être vissé à l'intérieur du deuxième trou (487) de la deuxième extrémité (482) de barre supérieure, ou à l'intérieur du troisième trou (474) de la deuxième extrémité (472) de barre standard ;
- une barre inférieure (460) comprenant deux extrémités (461, 462), où une première extrémité (461) loge le deuxième boulon d'ajustement (463) configuré pour être vissé à l'intérieur du troisième ou du deuxième trou (474, 487), et où une deuxième extrémité (462) comprend un alésage traversant (464) configuré pour recevoir un boulon traversant (426) pour relier la barre (450) à l'élément de base (420) ;
- et un support de montage (490) destiné à être fixé à la partie latérale (122a, 122b) de la charge (122),
- dans lequel les barres inférieure (460) et standard (470) comprennent respectivement sur leurs surfaces externes un filetage mâle (466, 476) configuré pour permettre à la rotation de la barre (450) autour du support de montage (490) d'aller vers le haut jusqu'à la barre standard supérieure (470), ou d'aller vers le bas jusqu'à la barre inférieure (460) en fonction du sens de rotation de la barre (450).

2. Système d'élévateur (400), selon la revendication 1, comprenant en outre des moyens d'attache (484) qui comprennent :
- des moyens de fixation (485) configurés pour fixer la barre supérieure (480) à la structure interne du compartiment d'aéronef (126), et
- des moyens expansibles (486) configurés pour régler la longueur de la barre (450), et la distance entre la barre supérieure (480) et la surface supérieure (411) du support (410).

3. Système d'élévateur (400), selon la revendication 2, dans lequel les moyens expansibles (486) sont configurés pour s'insérer dans le premier trou (483) de la première extrémité (481) de la barre supérieure (480), pour permettre à la barre (450) de tourner librement et éviter que la structure d'aéronef ne supporte le poids de la charge (122).
